(19) Europäisches Patentamt
European Patent Office
Office européen des brevets

(11) **EP 4 339 938 A1**

(12) **EUROPEAN PATENT APPLICATION**
published in accordance with Art. 153(4) EPC

(43) Date of publication:
**20.03.2024 Bulletin 2024/12**

(21) Application number: **21940095.9**

(22) Date of filing: **18.05.2021**

(51) International Patent Classification (IPC):
**G09G 5/377** (2006.01)

(52) Cooperative Patent Classification (CPC):
**G09G 3/001; G02B 27/0179;** G06F 3/147;
G09G 3/003; G09G 2320/0693; G09G 2340/0464;
G09G 2380/10

(86) International application number:
**PCT/CN2021/094344**

(87) International publication number:
**WO 2022/241638 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **JIANG, Xinyan
Shenzhen, Guangdong 518129 (CN)**
• **ZHANG, Yuteng
Shenzhen, Guangdong 518129 (CN)**
• **YU, Hai
Shenzhen, Guangdong 518129 (CN)**

(74) Representative: **Huawei European IPR
Huawei Technologies Duesseldorf GmbH
Riesstraße 25
80992 München (DE)**

(54) **PROJECTION METHOD AND APPARATUS, AND VEHICLE AND AR-HUD**

(57)    This application is applicable to the field of intelligent vehicles, and specifically provides a projection method and apparatus, a vehicle, and an AR-HUD. The projection method includes: obtaining image information and position information of a calibration object; projecting the calibration object based on the image information and the position information of the calibration object and an imaging model; and when an overlap ratio between the calibration object and a projection plane of the calibration object is less than a first threshold, adjusting a parameter of the imaging model. According to this application, an image projected and displayed may be aligned with a real world, which improves a projection display effect.

EP 4 339 938 A1

```
                                                    ┌─ S401
┌─────────────────────────────────────────────────────────┐
│ Obtain image information and position information of a    │
│ calibration object                                        │
└─────────────────────────────────────────────────────────┘
                          │
                          ▼                         ┌─ S402
┌─────────────────────────────────────────────────────────┐
│ Project the calibration object based on the image         │
│ information and the position information of the            │
│ calibration object and an imaging model                   │
└─────────────────────────────────────────────────────────┘
                          │
                          ▼                         ┌─ S403
┌─────────────────────────────────────────────────────────┐
│ When an overlap ratio between the calibration object and  │
│ a projection plane of the calibration object is less than │
│ a first threshold, adjust a parameter of the imaging model│
└─────────────────────────────────────────────────────────┘
```

FIG. 4

## Description

## TECHNICAL FIELD

This application relates to the field of intelligent vehicles, and in particular, to a projection method and apparatus, a vehicle, and an AR-HUD.

## BACKGROUND

A head up display (Head Up Display, HUD) is a display apparatus that projects and displays an image to a front view of a driver. The head up display mainly uses an optical reflection principle to project and display important related information on a windshield of a vehicle in a two-dimensional image manner. A height of the head up display is approximately horizontal to eyes of the driver. When the driver looks forward through the windshield, the two-dimensional image projected by the HUD is displayed on a virtual image plane in front of the windshield. In comparison with using traditional instruments and central control screens, drivers do not need to lower their heads when observing images projected and displayed by HUD. This avoids switching between an image and a road plane, reduces crisis response time, and improves driving safety. An augmented reality (Augmented Reality, AR) head up display (AR-HUD) proposed in recent years can fuse an AR effect projected and displayed by the HUD with real road surface information, to enhance acquisition of the road information by the drivers, and implement functions such as AR navigation and AR warning.

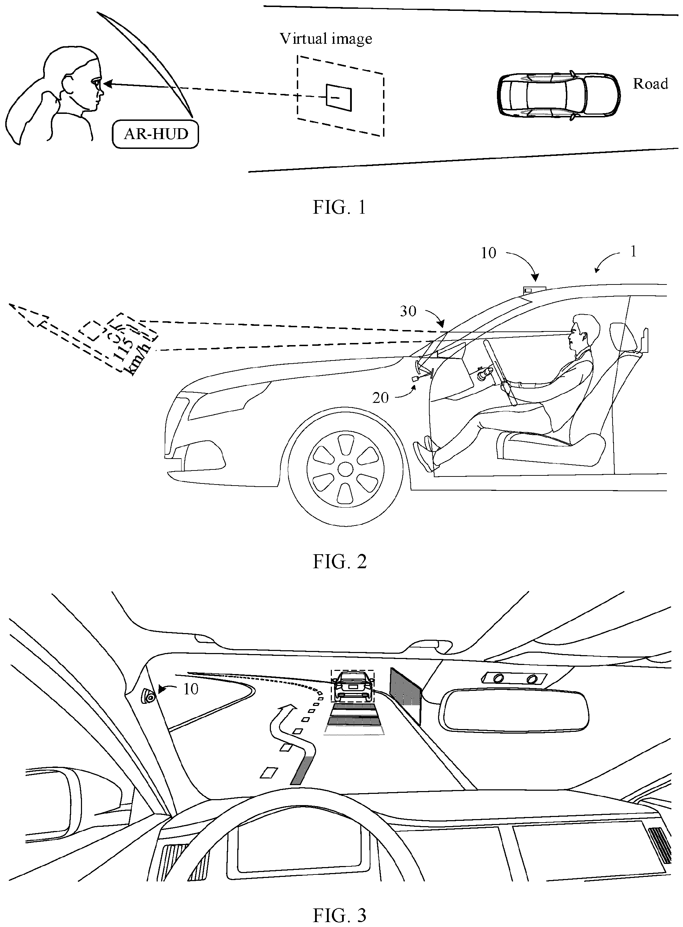

To implement functions such as road navigation and warning of the AR-HUD, three-dimensional perception data obtained by a sensor needs to be sent to virtual three-dimensional space for rendering an augmented reality effect. After the rendering is completed, the three-dimensional perception data is mapped to a two-dimensional virtual image plane displayed by the HUD, and finally is mapped back to three-dimensional space by using a human eye. In this process, it needs to be ensured that three points of "a human eye, a display picture of an HUD, and a real object" are kept in a line, to ensure that a size and a position of the display picture of the HUD observed by the human eye are consistent with those of the real object, so that a virtual image in the display picture of the HUD observed by the human eye shown in FIG. 1 can be exactly fused with the corresponding real object, to implement matching and fusion of an AR effect and a display scenario. In addition, for different positions of a same driver in a driving process, or for different drivers, when a position of the human eye changes, it is required that the display picture of the HUD needs to be correspondingly adjusted, to ensure that the display picture of the HUD observed by the human eye is always fused with the real road surface information.

Therefore, how to ensure that the display picture of the HUD is always fused with a real world under a premise that the driver has different sitting postures or the vehicle is driven by different drivers becomes a key research direction for improving a display effect of the AR-HUD.

## SUMMARY

In view of this, this application provides a projection method and apparatus, a vehicle, and an AR-HUD, so that an image projected and displayed is always aligned with a real world, and a projection display effect is improved.

It should be understood that, in the solution provided in this application, the projection method may be performed by a projection apparatus or some devices in a projection apparatus. The projection apparatus has a projection function. For example, the projection apparatus is an AR-HUD, an HUD, or another apparatus having a projection function. Some devices in the projection apparatus may be a processing chip, a processing circuit, a processor, or the like.

According to a first aspect of this application, a projection method is provided, including: obtaining image information and position information of a calibration object; projecting the calibration object based on the image information and the position information of the calibration object and an imaging model; and when an overlap ratio between the calibration object and a projection plane of the calibration object is less than a first threshold, adjusting a parameter of the imaging model.

According to the foregoing, in this method, the image information and the position information of the real calibration object are obtained, the calibration object is projected and displayed based on the image information and the position information of the calibration object and the imaging model, and the parameter of the imaging model is adjusted based on the overlap ratio between the calibration object and the projection plane of the calibration object, so that the calibration object and the projection plane of the calibration object overlap as much as possible, to achieve an alignment effect and improve immersive experience of a user. The method may be applied to the AR-HUD, the HUD, or another apparatus having a projection function, to implement alignment and calibration on the apparatus and improve a projection display effect.

In a possible implementation of the first aspect, the adjusting a parameter of the imaging model includes: adjusting one or more parameters of a field of view and a position of an imaging plane of the imaging model.

According to the foregoing, a two-dimensional image corresponding to the calibration object may be generated on the imaging plane of the imaging model based on the obtained image information and the position information of the calibration object, and the imaging plane of the imaging model is used as a complete projection image for projection display during projection. For example, the imaging model may be in a form of an imaging view frustum, an imaging cylinder, an imaging cube, or the like. The parameter of the field of view of the imaging model may determine an area size of the imaging plane and a proportion of the two-dimensional image of the calibration object relative to the imaging plane, and the parameter of the position of the imaging plane of the imaging model may determine a position of the two-dimensional image of the calibration object relative to the imaging plane. Therefore, when the overlap ratio between the calibration object and the projection plane of the calibration object is less than the preset first threshold, the field of view or the position of the imaging plane of the imaging model may be correspondingly adjusted based on an area offset or a position offset or a size offset.

In a possible implementation of the first aspect, the adjusting a parameter of the imaging model when an overlap ratio between the calibration object and a projection plane of the calibration object is less than a first threshold specifically includes: when an area difference between the calibration object and the projection plane of the calibration object is greater than a second threshold, adjusting the field of view of the imaging model.

According to the foregoing, when the area difference between the calibration object and the projection plane of the calibration object is greater than a preset second threshold, an area of the imaging plane may be adjusted by adjusting the field of view of the imaging model. When the area of the projection plane of the calibration object is greater than an area of the calibration object, the field of view of the imaging model may be enlarged, the imaging plane is enlarged proportionally, and a proportion of the generated two-dimensional image of the calibration object on the imaging plane is proportionally reduced. In this case, the area of the projection plane of the calibration object that is projected and displayed is also proportionally reduced relative to the calibration object, so that the area difference between the projection plane of the calibration object and the calibration object is less than the preset second threshold. Similarly, when the area of the projection plane of the calibration object is less than an area of the calibration object, the field of view of the imaging model may be reduced, the imaging plane is reduced proportionally, and a proportion of the generated two-dimensional image of the calibration object on the imaging plane is proportionally enlarged. In this case, the area of the projection plane of the calibration object that is projected and displayed is also proportionally enlarged relative to the calibration object, so that the area difference between the projection plane of the calibration object and the calibration object is less than the preset second threshold.

In a possible implementation of the first aspect, the adjusting a parameter of the imaging model when an overlap ratio between the calibration object and a projection plane of the calibration object is less than a first threshold specifically includes: when an offset between the calibration object and the projection plane of the calibration object is greater than a third threshold, adjusting a two-dimensional position of the imaging plane of the imaging model.

According to the foregoing, when the offset between the calibration object and the projection plane of the calibration object is greater than a preset third threshold, because a position of the calibration object is fixed, in this case, the two-dimensional position of the imaging plane of the imaging model may be adjusted, where the two-dimensional position specifically refers to an upper position, a lower position, a left position, and a right position of the imaging plane, to correspondingly adjust a relative position of the generated two-dimensional image of the calibration object on the imaging plane, so that the offset between the calibration object and the projection plane of the calibration object is less than the preset third threshold.

In a possible implementation of the first aspect, the overlap ratio between the calibration object and the projection plane of the calibration object is determined by using a pixel offset between the calibration object and the projection plane of the calibration object, and the pixel offset is determined by using an image that is captured by a camera and that includes the calibration object and the projection plane of the calibration object.

According to the foregoing, in this method, when the alignment or calibration of the calibration object and the projection plane of the calibration object is implemented, one camera may be disposed at the human-eye position of the user, to simulate an effect observed by a human eye. The camera shoots the calibration object and the projection plane of the calibration object, to generate one or more images, and determines the pixel offset between the calibration object and the projection plane of the calibration object based on the generated image, to determine the overlap ratio between the calibration object and the projection plane of the calibration object. A manner that the camera is used for shooting may improve accuracy of detecting the overlap ratio between the calibration object and the projection plane of the calibration object, and the overlap ratio is intuitively displayed in a form of data, which avoids an error caused by the human eye observation by the user.

In a possible implementation of the first aspect, the imaging model is trained based on a training set including a plurality of training samples, where the training samples include parameters of human-eye position information, the image information and the position information of the calibration object, and the overlap ratio between the calibration object and the projection plane of the calibration object.

According to the foregoing, to improve accuracy of the imaging model, a neural network or deep learning manner may be used, and the training set including the plurality of training samples is used to train the imaging model. The training sample may be formed by using the parameter of human-eye position information and the parameter of the image information and the position information of the calibration object as main input, and using the parameter of the overlap ratio between the calibration object and the projection plane of the calibration object as output. The overlap ratio between the calibration object and the projection plane of the calibration object is improved through a plurality of times of training. In this way, the imaging model has a wider application scope, and has features of deep learning and optimization, to meet use experience of different users.

In a possible implementation of the first aspect, the method further includes:
obtaining an alignment requirement of a user, and sending an alignment start prompt message to the user; obtaining a human-eye position of the user, and aligning the parameter of the imaging model based on the human-eye position of the user; and after the alignment is completed, sending an alignment completion prompt message to the user.

According to the foregoing, in this method, the parameter of the imaging model may be automatically aligned based on the human-eye position of the user without perception of the user, or the user may be guided to propose the alignment requirement in a human machine interaction manner, and the parameter of the imaging model is aligned in a manner like a voice prompt or a display prompt. After the alignment is completed, the alignment completion prompt message is sent to the user, to improve user experience.

In a possible implementation of the first aspect, the method further includes:

determining, by using a human eye, whether the calibration object overlaps the projection plane of the calibration object; and
when the calibration object does not overlap the projection plane of the calibration object, adjusting a parameter of an aligned imaging model according to an adjustment instruction of the user.

According to the foregoing, in this method, the parameter of the imaging model may be aligned based on the human-eye position of the user, so that the overlap ratio between the calibration object and the projection plane of the calibration object reaches a preset threshold. In addition, when the user is not satisfied with the overlap ratio between the current calibration object and the projection plane of the calibration object, the parameter of the imaging model may be further adjusted based on subjective experience, to implement customized projection display, to meet a target requirement of the user.

According to a second aspect of this application, a projection apparatus is provided. The projection apparatus includes:

an obtaining module, configured to obtain image information and position information of a calibration object;
a projection module, configured to project the calibration object based on the image information and the position information of the calibration object and an imaging model; and
an adjustment module, configured to: when an overlap ratio between the calibration object and a projection plane of the calibration object is less than a first threshold, adjust a parameter of the imaging model.

In a possible implementation of the second aspect, when the adjustment module is configured to adjust the parameter of the imaging model, the adjustment module is specifically configured to:
adjust one or more parameters of a field of view and a position of an imaging plane of the imaging model.

In a possible implementation of the second aspect, the adjustment module is specifically configured to: when an area difference between the calibration object and the projection plane of the calibration object is greater than a second threshold, adjust the field of view of the imaging model.

In a possible implementation of the second aspect, the adjustment module is specifically configured to: when an offset between the calibration object and the projection plane of the calibration object is greater than a third threshold, adjust a two-dimensional position of the imaging plane of the imaging model.

In a possible implementation of the second aspect, the overlap ratio between the calibration object and the projection plane of the calibration object is determined by using a pixel offset between the calibration object and the projection plane of the calibration object, and the pixel offset is determined by using an image that is captured by a camera and that includes the calibration object and the projection plane of the calibration object.

In a possible implementation of the second aspect, the imaging model is trained based on a training set including a plurality of training samples, where the training samples include parameters of human-eye position information, the image information parameter and the position information of the calibration object, and the overlap ratio between the calibration object and the projection plane of the calibration object.

In a possible implementation of the second aspect, the projection apparatus further includes:
a prompt module, configured to: when obtaining an alignment requirement of a user, send an alignment start prompt message to the user.

The adjustment module is further configured to align the parameter of the imaging model based on an obtained human-eye position of the user.

The prompt module is further configured to: after the alignment is completed, send an alignment completion prompt message to the user.

In a possible implementation of the second aspect,
the prompt module is further configured to prompt the user to determine, by using the human eye, whether the calibration object overlaps the projection plane of the calibration object.

The adjustment module is further configured to: when the calibration object does not overlap the projection plane of the calibration object, adjust a parameter of an aligned imaging model according to an adjustment instruction of the user.

To achieve the foregoing objective, according to a third aspect of this application, a system is provided, including:

the projection apparatus in the plurality of technical solutions provided in the second aspect and the foregoing optional implementations, and an in-vehicle infotainment.

In a possible implementation, the system further includes: a storage apparatus, configured to store an imaging model and a training set of the imaging model; and a communication apparatus, configured to implement communication and interaction between the storage apparatus and a cloud.

In a possible implementation, the system is a vehicle.

According to a fourth aspect of this application, a computing device is provided, including a processor and a memory, where the memory stores program instructions, and when the program instructions are executed by the processor, the processor is enabled to perform the projection method in the plurality of technical solutions according to the first aspect and the foregoing optional implementations.

In a possible implementation, the computing device is one of an AR-HUD or an HUD.

In a possible implementation, the computing device is a vehicle.

In a possible implementation, the computing device is one of an in-vehicle infotainment and an in-vehicle computer.

According to a fifth aspect of this application, a computer-readable storage medium is provided. The computer-readable storage medium stores program code, and when the program code is executed by a computer or a processor, the computer or the processor is enabled to perform the projection method in the plurality of technical solutions provided in the first aspect and the foregoing optional implementations.

According to a sixth aspect of this application, a computer program product is provided. When program code included in the computer program product is executed by a computer or a processor, the computer or the processor is enabled to perform the projection method in the plurality of technical solutions provided in the first aspect and the foregoing optional implementations.

It should be understood that, in the foregoing plurality of technical solutions, a plurality of thresholds associated with projection adjustment are further provided, including a first threshold, a second threshold, and a third threshold. It should be understood that these thresholds are not mutually exclusive and may be used in a combined manner. The thresholds may be a decimal or a relative proportion, for example, a percentage. For any one of these thresholds, that a projection area, an overlap ratio, an area difference, or an offset is equal to one of the foregoing preset thresholds may be considered as a critical state. For the critical state, it may be considered that a threshold determining condition is satisfied, and a corresponding subsequent operation is performed; or it may be considered that a threshold determining condition is not satisfied, and a corresponding subsequent operation is not performed.

In conclusion, according to the projection method and apparatus, the vehicle, and the AR-HUD provided in this application, by obtaining the image information and the position information of the calibration object and based on the imaging model, the calibration object is projected and displayed. The parameter of the imaging model is adjusted to improve the overlap ratio between the calibration object and a projection plane of the calibration object, to improve the projection display effect. In this application, the imaging model may generate the two-dimensional image of the calibration object on the imaging plane of the imaging model based on the obtained human-eye position information of the user and the image information and the position information of the calibration object, and perform projection display by using the projection apparatus. The overlap ratio between the calibration object and a projection plane of the calibration object may be used to evaluate accuracy and stability of the imaging model. In some embodiments of this application, the imaging model may be further trained in a neural network or deep learning manner, so that the accuracy and the stability of the imaging model are continuously optimized, and the imaging model is applicable to changes of human eye positions of different users. In addition, with rapid development of 5G technologies and intelligent vehicles, the imaging model may be further optimized and trained in a cloud interaction manner, to be applicable to different in-vehicle infotainment projection apparatuses, and one or more parameters of the imaging model are automatically adjusted based on hardware parameters of the different in-vehicle infotainment projection apparatuses, to meet customization requirements of different users.

**BRIEF DESCRIPTION OF DRAWINGS**

FIG. 1 is a schematic diagram of imaging of an existing AR-HUD in a use scenario;
FIG. 2 is a schematic diagram of an application scenario of a projection method according to an embodiment of this application;
FIG. 3 is a schematic diagram of another application scenario of a projection method according to an embodiment of this application;
FIG. 4 is a flowchart of a projection method according to an embodiment of this application;
FIG. 5 is a flowchart of a calibration method according to an embodiment of this application;

FIG. 6 is a schematic diagram of a system architecture of an AR-HUD according to an embodiment of this application;

FIG. 7 is a flowchart of an AR-HUD projection method according to an embodiment of this application;

FIG. 8A is a schematic diagram of an imaging view frustum according to an embodiment of this application;

FIG. 8B is a schematic diagram of spatial conversion from an imaging view frustum to an AR-HUD according to an embodiment of this application;

FIG. 9A is a schematic diagram of a horizontal view of a virtual human eye and an imaging view frustum in a virtual coordinate system according to an embodiment of this application;

FIG. 9B is a schematic diagram of a top view of a human eye and a virtual image plane of an AR-HUD in a real coordinate system according to an embodiment of this application;

FIG. 10A is a schematic diagram of vertical offset between a target box on which a virtual image plane of an AR-HUD is displayed and a calibration board according to an embodiment of this application;

FIG. 10B is a schematic diagram of horizontal offset between a target box on which a virtual image plane of an AR-HUD is displayed and a calibration board according to an embodiment of this application;

FIG. 11 is a diagram of an architecture of a projection apparatus according to an embodiment of this application;

FIG. 12A is a schematic diagram of a human machine interface according to an embodiment of this application;

FIG. 12B is a schematic diagram of another human machine interface according to an embodiment of this application; and

FIG. 13 is a diagram of an architecture of a computing device according to an embodiment of this application.

It should be understood that, in the foregoing schematic diagrams of structures, sizes and forms of block diagrams are for reference only, and shall not constitute exclusive interpretations to embodiments of the present invention. A relative position and an inclusion relationship between the block diagrams shown in the schematic diagrams of the structures only schematically represent a structural association between the block diagrams, rather than limiting a physical connection mode in embodiments of the present invention.

## DESCRIPTION OF EMBODIMENTS

The following further describes technical solutions provided in this application with reference to the accompanying drawings and embodiments. It should be understood that a system structure and a service scenario provided in embodiments of this application are mainly intended to explain possible implementations of the technical solutions in this application, and should not be construed as a unique limitation on the technical solutions in this application. A person of ordinary skill in the art may learn that the technical solutions provided in this application are also applicable to a similar technical problem as a system structure evolves and a new service scenario emerges.

It should be understood that a memory management solution provided in embodiments of this application includes a projection method and apparatus, a vehicle, and an AR-HUD. Because problem-resolving principles of the technical solutions are the same or similar, in the following descriptions of specific embodiments, some repeated parts may not be described again, but it should be considered that the specific embodiments are mutually referenced and may be combined with each other.

A head-up display device is usually installed in a vehicle cockpit, and projects display information to a front windshield of a vehicle. The projected display information is reflected by the front windshield, enters eyes of a user, and is presented in the front of the vehicle, so that the display information is fused with an environment of a real world, to form a display effect of augmented reality. For example, a camera coordinate system and a human-eye coordinate system are established, to determine a correspondence between the camera coordinate system and the human-eye coordinate system. An augmented reality display image is determined based on image information shot by a vehicle-mounted camera and the correspondence between the camera coordinate system and the human-eye coordinate system. Then, projection display is performed based on a mapping relationship between the augmented reality display image and an HUD image. However, in this implementation, in a driving process, a conversion relationship between the human-eye coordinate system and the camera coordinate system needs to be calibrated in real time. Consequently, a calculation amount is large, and task complexity is high.

To achieve a better projection display effect, embodiments of this application provide a projection method and apparatus, a vehicle, and an AR-HUD. A projection display effect may be adjusted in real time based on a change of a position of a human eye of a user, so that an AR display image projected and displayed is always aligned with a real world, which improves the projection display effect. The user is usually a driver. Alternatively, the user may be a front passenger, a rear passenger, or the like. For example, a plurality of HUD devices are installed in a vehicle cockpit, and different HUD devices are for different users. In an adjustment process, an HUD device for a driver in a driving seat may be adjusted based on a human-eye position of the driver, so that an AR display image seen by the driver can be aligned with a real world ahead. The AR display image may be navigation information, vehicle speed information, or other prompt information on a road. An HUD device for a passenger in a front passenger seat may be adjusted based on a human-eye position of the front passenger, so that an AR display image seen by the passenger can also be aligned with the world ahead.

FIG. 2 and FIG. 3 are schematic diagrams of an application scenario of a projection method according to an embodiment of this application. Refer to FIG. 2 to FIG. 3. The application scenario of this embodiment specifically relates to a vehicle. A vehicle 1 has a capture apparatus 10, a projection apparatus 20, and a display apparatus 30.

The capture apparatus 10 may include an external capture apparatus of the vehicle and an internal capture apparatus of the vehicle. The external capture apparatus of the vehicle may be specifically a laser radar, an in-vehicle camera, or another device or a plurality of combined devices having an image capture or optical scanning function. The external capture apparatus of the vehicle may be disposed on a top of the vehicle 1, a head, or a side of a rear-view mirror of a vehicle cockpit facing outside the vehicle, and may be installed inside the vehicle, or may be installed outside the vehicle. The external capture apparatus of the vehicle is mainly configured to detect and collect image information and position information of an environment in front of the vehicle, where the environment in front of the vehicle may include related information such as a vehicle in front of the vehicle, an obstacle, or a road indicator. The internal capture apparatus of the vehicle may be specifically a device like an in-vehicle camera or a human eye detector. In a specific implementation process, a position of the internal capture apparatus of the vehicle may be set as required. For example, the internal capture apparatus of the vehicle may be disposed on a side of a pillar A or B of the vehicle cockpit or a side of the rear-view mirror of the vehicle cockpit facing a user, may be disposed in an area near a steering wheel or a central control console, may be disposed above a display screen at the rear of a seat, or the like. The internal capture apparatus of the vehicle is mainly configured to detect and collect human-eye position information of a driver or passenger in the vehicle cockpit. There may be one or more internal capture apparatuses of the vehicle. A position and a quantity of the internal capture apparatus of the vehicle are not limited in this application.

The projection apparatus 20 may be an HUD, an AR-HUD, or another device having a projection function, and may be installed above or inside the central control console of the vehicle cockpit. The projection apparatus 20 usually includes a projector, a reflection mirror, a projection mirror, an adjustment motor, and a control unit. The control unit is an electronic device, and may be specifically a conventional chip processor like a central processing unit (CPU) or a microprocessor (MCU), or may be terminal hardware such as a mobile phone or a tablet. The control unit is communicatively connected to the capture apparatus 10 and the display apparatus 30. An imaging model may be preset in the control unit, or an imaging model preset in another device of the vehicle is acquired. A parameter of the imaging model is associated with the human-eye position information collected by the internal capture apparatus of the vehicle, and the parameter can be aligned based on the human-eye position information. Then, a projection image is generated based on environment information collected by the external capture apparatus of the vehicle, and is output on a projector. As shown in FIG. 3, the projected image may include an augmented reality display image generated based on the environment information, and may further include images such as a vehicle speed and navigation.

The display apparatus 30 may be a front windshield of the vehicle or a transparent independent display screen, and is configured to reflect image light emitted by the projection apparatus, so that the image light enters eyes of the user. In this way, when the driver looks out of the vehicle through the display apparatus 30, the driver can see a virtual image with a depth of field effect, and the virtual image plane overlaps an environment of a real world, to present an augmented reality display effect to the user.

The capture apparatus 10, the projection apparatus 20, and another apparatus may separately perform data communication in a manner like wired communication or wireless communication (for example, Bluetooth or Wi-Fi). For example, after collecting the image information, the capture apparatus 10 may transmit the image information to the projection apparatus 20 through Bluetooth communication. For another example, the projection apparatus 20 may send control signaling to the capture apparatus 10 through Bluetooth communication, and adjust a capture parameter of the capture apparatus 10, for example, a shooting angle. It should be understood that data processing may be completed in the projection apparatus 20, or may be completed in the capture apparatus 10, or may be completed in another processing device, for example, a device like an in-vehicle infotainment or an in-vehicle computer.

According to the foregoing structure, the vehicle can implement the augmented reality display effect based on the environment information of the real world, and can adjust the generated projection image based on the human-eye position information of the user, so that the augmented reality display image projected and displayed always overlaps the environment information of the real world, which improves immersive viewing experience of the user.

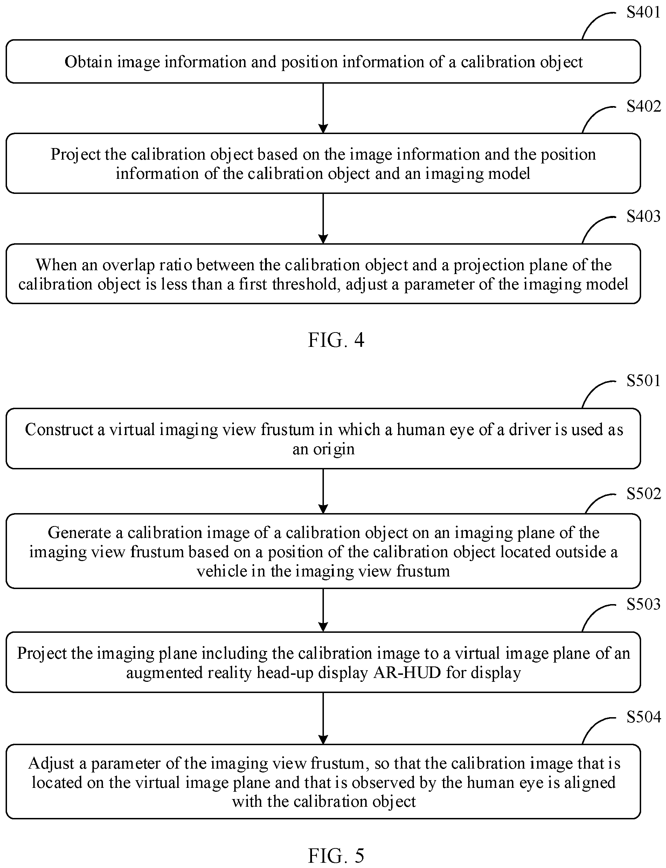

FIG. 4 is a flowchart of a projection method according to an embodiment of this application. The projection method may be performed by a projection apparatus or some devices in a projection apparatus, for example, an AR-HUD, an HUD, a vehicle, or a processor. Specifically, functions such as alignment, calibration, and projection display of the projection apparatus or some devices in the projection apparatus may be implemented. An application process of the projection method may be implemented in a starting up and static state of a vehicle, or may be implemented in a running process of the vehicle. As shown in FIG. 4, the projection method includes the following steps.

S401: Obtain image information and position information of a calibration object.

The calibration object may be specifically a static object located outside the vehicle, for example, a static vehicle, a tree, or a traffic identifier, or a calibration board having a geometric shape, or may be a dynamic object located outside the vehicle, for example, a running vehicle or a walking pedestrian. The processor may obtain, by using an interface circuit, the image information and the position information of the calibration object collected by the capture apparatus. The image information may be an image captured by a camera, point cloud data collected by a laser radar, or information in another form. The image information further includes information such as resolution, a size, a dimension, or a color. The position information may be coordinate data, direction information, or information in another form. The processor may be a processor of the projection apparatus, or may be a processor of an in-vehicle processing apparatus like an in-vehicle infotainment or an in-vehicle computer.

S402: Project the calibration object based on the image information and the position information of the calibration object and an imaging model.

Based on the image information and the position information of the calibration object that are obtained in step S401, the processor may generate, in the imaging model, a calibration image corresponding to the calibration object, and perform projection and output by using the interface circuit. The imaging model may be constructed based on parameters such as a human-eye position, an HUD position, a field of view (field of view, FOV) of an HUD, a projection plane (virtual image plane) of the HUD, display resolution of the HUD, and a look-down angle from a human eye to the HUD. The constructed imaging model includes parameters such as an origin, a field of view, a near plane (imaging plane), and a far plane. For example, the imaging model may be in a form of an imaging view frustum, an imaging cylinder, an imaging cube, or the like. For example, when the imaging model is the imaging view frustum, the origin may be determined based on the human-eye position, the field of view may be determined based on the field of view of the HUD, and is used to determine a field of view range of the imaging view frustum, a near plane is used as an imaging plane during imaging, and a far plane may be determined based on a farthest viewing distance of the human eye. The processor may generate a two-dimensional image corresponding to the calibration object on the imaging plane of the imaging model based on the obtained image information and the position information of the calibration object and use the imaging plane of the imaging model as a complete projection image for projection display during projection.

S403: When an overlap ratio between the calibration object and a projection plane of the calibration object is less than a first threshold, adjust the parameter of the imaging model.

In some embodiments, the overlap ratio between the calibration object and the projection plane of the calibration object may be determined by observation by the human eye of the user. In this case, the first threshold may not be a specific value, but subjective experience of the user, for example, whether the calibration object overlaps the projection plane of the calibration object. In addition, subsequent adjustment may be performed on the parameter of the imaging model based on feedback of the user. In some other embodiments, the overlap ratio between the calibration object and the projection plane of the calibration object may be determined by using information obtained by the capture apparatus. For example, the overlap ratio between the calibration object and the projection plane of the calibration object is determined based on a pixel offset between the calibration object and the projection plane of the calibration object. For example, a camera is disposed at a human eye position of a simulated user, an image including the calibration object and the projection plane of the calibration object is captured by using the camera, and one or more images are obtained by photographing. The pixel offset between the calibration object and the projection plane of the calibration object is determined based on resolution of the image, and the overlap ratio between the calibration object and the projection plane of the calibration object may be obtained by calculation based on the pixel offset. The overlap ratio obtained by calculation may be specifically a value with a percentage. In this case, the first threshold is also a specific percentage value, and whether to adjust the parameter of the imaging model is determined by comparing the overlap ratio with the first threshold. It should be understood that the overlap ratio may alternatively be a decimal or in another form. This is not limited in this application.

When the overlap ratio between the calibration object and the projection plane of the calibration object is less than a preset first threshold, the processor of the projection apparatus may improve the overlap ratio between the calibration object and the projection plane of the calibration object by adjusting the parameter of the imaging model. Parameters that may be adjusted by the imaging model include one or more parameters of the field of view and a position of the imaging plane. For example, the parameter of the field of view may determine an area size of the imaging plane of the imaging model and a proportion of the two-dimensional image of the calibration object relative to the imaging plane, and the parameter of the position of the imaging plane of the imaging model may determine a position of the two-dimensional image of the calibration object relative to the imaging plane. Therefore, when the overlap ratio between the calibration object and the projection plane of the calibration object is less than the preset first threshold, the field of view or the position of the imaging plane of the imaging model may be correspondingly adjusted based on an area offset or a position offset. Specifically, an implementation of step S403 includes:

when an area difference between the calibration object and the projection plane of the calibration object is greater than a second threshold, adjusting the field of view of the imaging model; or
when an offset between the calibration object and the projection plane of the calibration object is greater than a third threshold, adjusting a two-dimensional position of the imaging plane of the imaging model.

In this embodiment, the first threshold, the second threshold, and the third threshold may be preset and adjusted based on a user requirement or an industry standard. When the area difference between the calibration object and the projection plane of the calibration object is greater than a preset second threshold, an area of the imaging plane may be adjusted by adjusting the field of view of the imaging model. When the area of the projection plane of the calibration object is greater than an area of the calibration object, the field of view of the imaging model may be enlarged, the imaging plane is enlarged proportionally, and a proportion of the generated two-dimensional image of the calibration object on the imaging plane is proportionally reduced. In this case, the area of the projection plane of the calibration object that is projected and displayed is also proportionally reduced relative to the calibration object, so that the area difference between the projection plane of the calibration object and the calibration object is less than the preset second threshold. Similarly, when the area of the projection plane of the calibration object is less than an area of the calibration object, the field of view of the imaging model may be reduced, the imaging plane is reduced proportionally, and a proportion of the generated two-dimensional image of the calibration object on the imaging plane is proportionally enlarged. In this case, the area of the projection plane of the calibration object that is projected and displayed is also proportionally enlarged relative to the calibration object, so that the area difference between the projection plane of the calibration object and the calibration object is less than the preset second threshold. When the offset between the calibration object and the projection plane of the calibration object is greater than a preset third threshold, because a position of the calibration object is fixed, in this case, the two-dimensional position of the imaging plane of the imaging model may be adjusted, where the two-dimensional position specifically refers to an upper position, a lower position, a left position, and a right position of the imaging plane on a two-dimensional plane of the imaging model, to correspondingly adjust a relative position of the generated two-dimensional image of the calibration object on the imaging plane. For example, when the two-dimensional position of the imaging plane of the imaging model is moved upward, a position of the two-dimensional image of the calibration object on the imaging plane is correspondingly moved downward. Similarly, when the two-dimensional position of the imaging plane of the imaging model is moved leftward, the position of the two-dimensional image of the calibration object on the imaging plane is correspondingly moved rightward. The two-dimensional position of the imaging plane of the imaging model is adjusted, so that the offset between the calibration object and the projection plane of the calibration object is less than the preset third threshold.

It should be understood that the area difference, the overlap ratio, and the like may be some example comparison parameters, and may be used in combination or replaced with each other, or may be replaced with another similar comparison parameter, for example, a size difference. A main objective is to determine a difference between a calibration object and a projected image of the calibration object captured by the current capture device, to adjust an imaging parameter or the imaging model.

In addition, to improve processing efficiency, the imaging model constructed in this embodiment may be further implemented by using a neural network model or a deep learning model. Specifically, the imaging model may be trained by using a training set including a plurality of training samples. The training sample may be formed by using a parameter of human-eye position information and a parameter of the image information and the position information of the calibration object as main input, and using a parameter of the overlap ratio between the calibration object and the projection plane of the calibration object as output. A specified overlap ratio threshold is used as a target (label), and the plurality of training samples are introduced to train the imaging model for a plurality of times, to obtain a result close to the target, and obtain a corresponding imaging model. According to the imaging model obtained through training, when the calibration object is projected, the overlap ratio between the calibration object and the projection plane of the calibration object may meet a requirement. In addition, with use of the imaging model, the imaging model has a feature of continuous deep learning and optimization, so that a projection effect of the imaging model can be better and an application scope may be wider, to meet use experience of different users.

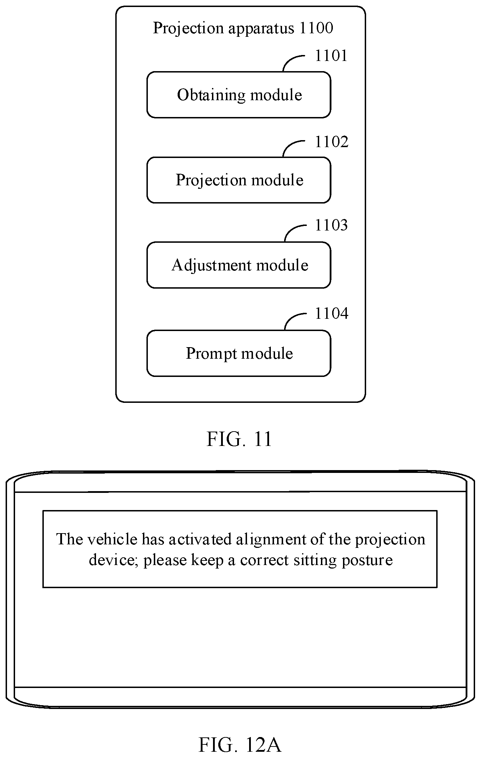

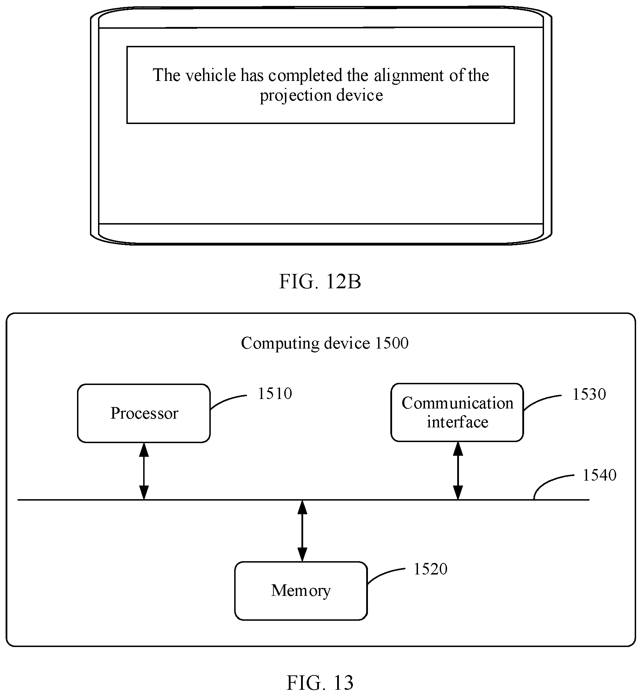

According to the projection method provided in this embodiment, parameter alignment of the imaging model may be automatically implemented based on the human-eye position of the user, to adjust a projection display effect. With development of intelligent driving technologies, the projection method is not only applicable to projection of a driver seat, but also applicable to projection of a front passenger seat or a rear passenger seat, for example, projection of audio and video entertainment content. In some extended embodiments, the projection method in this application may further guide the user to implement projection display alignment. For example, when the user has an alignment requirement, an alignment request or an alignment start prompt message may be sent to the user, and the human-eye position of the user is obtained by using the camera or the human eye detector in the vehicle. The parameter of the imaging model is aligned based on the human-eye position of the user, and an alignment completion prompt message is sent to the user when the alignment is completed. An alignment process may be completed by the user through guidance of a human machine interface (Human Machine Interface, HMI) of the vehicle, or may be completed by the user through guidance of a driver monitor system (Driver Monitor System, DMS). The prompt message may be a voice prompt, a graphic prompt on a central control screen of the vehicle, or the like, so that the user can intuitively experience the alignment process. In addition, in the alignment process, the user may further send an adjustment instruction based on personal subjective experience, to adjust the parameter of the imaging model, to meet a customization requirement of the user. In schematic diagrams of the human machine interface shown in FIG. 12A to FIG. 12B, when the alignment process is implemented by using the human machine interface of the vehicle, the graphic prompt may be implemented for the user by using the central control screen of the vehicle, to prompt and guide the user to complete an alignment and adjustment process of the projection apparatus. For example, when it is detected that the user gets on the vehicle, the alignment function of the projection apparatus may be automatically enabled, and a prompt message "The vehicle has activated alignment of the projection apparatus; please keep a correct sitting posture" is displayed on the central control screen shown in FIG. 12A. Then, the parameter of the imaging model of the projection apparatus is aligned by obtaining the human-eye position of the user, and after the alignment is completed, a prompt message "The vehicle has completed the alignment of the projection apparatus" is displayed on the central control screen shown in FIG. 12B. In some variant embodiments, in the alignment process, the user may further adjust the parameter of the imaging model on the central control screen of the vehicle based on the personal subjective experience. In some other variant embodiments, the alignment process may also be implemented through voice interaction. The vehicle may send the voice prompt to the user by using an acoustic system, and obtain a voice feedback of the user by using a microphone, to implement the alignment process.

As described above, the projection method provided in this embodiment of this application may implement the functions such as alignment, calibration, and projection display of the projection apparatus. The application process of the projection method may be implemented in the starting up and static state of the vehicle, or may be implemented in the running process of the vehicle. For example, FIG. 5 is a flowchart of a calibration method according to an embodiment of this application.

The calibration method may be implemented in a starting up and static state of a vehicle, and specifically relates to a construction process and an adjustment process of an imaging model. An adjusted imaging model can automatically align a parameter based on human-eye positions of different users, so that an image projected and displayed is always fused with environment information of a real world. In this embodiment, the projection apparatus may be an AR-HUD, the imaging model may be an imaging view frustum, and the user may be a driver of the vehicle. The calibration method may be verified by using a human eye of the driver. The calibration method shown in FIG. 5 includes the following steps.

S501: Construct a virtual view frustum of imaging in which the human eye of the driver is used as an origin.

For example, an AR-HUD in the vehicle or another point with a fixed position in the vehicle may be used as the origin to construct a real coordinate system and a virtual coordinate system, and a correspondence between the virtual coordinate system and the real coordinate system is determined. The real coordinate system is a coordinate system of real three-dimensional space, and is used to determine a real position of a human eye, a virtual image plane of the AR-HUD, a calibration object, or the like in the real world. The virtual coordinate system is a coordinate system of virtual three-dimensional space, and is used to determine a virtual position of the human eye, the virtual image plane of the AR-HUD, the calibration object, or the like in the real world, to render a three-dimensional AR effect.

In this embodiment, because a human-eye position of the driver constantly changes, generally, the human eye is not used as an origin for constructing the real coordinate system and the virtual coordinate system.

In this embodiment, information such as the detected human eye, the calibration object, and an installation position and a projection angle of the AR-HUD is introduced into the real coordinate system based on the constructed real coordinate system, so that a position of the human eye, a position of the virtual image plane of the AR-HUD, and a position of the calibration object in the real coordinate system may be separately acquired, where the position may be specifically three-dimensional coordinates in the real coordinate system. The virtual image plane of the AR-HUD is a virtual image plane that may be seen by a human eye through a windshield of a vehicle. A two-dimensional image displayed on the virtual image plane may be mapped to a three-dimensional real world through observation by the human eye. For ease of calibration, the calibration object needs to be selected within an observation range formed by the human eye and the virtual image plane of the AR-HUD. The selected calibration object may be an object having a regular geometric shape, for example, may be a calibration board of a quadrilateral. A calibration image generated based on the calibration board may be specifically a virtual box of a quadrilateral. When the virtual box is projected to the virtual image plane of the AR-HUD for display, whether the virtual box completely overlaps the calibration board is observed by using the human eye, to verify whether the virtual box and the calibration board are aligned and displayed on the virtual image plane of the AR-HUD.

A position of the human eye in the virtual coordinate system is obtained based on the position of the human eye in the real coordinate system and the correspondence between the virtual coordinate system and the real coordinate system. The position of the human eye in the virtual coordinate system is used as the origin, and the imaging view frustum is constructed based on a specified field of view, where the calibration object is located within a view frustum range of the imaging view frustum. In this embodiment, the constructed view frustum of imaging may be specifically a horizontal-view view frustum of imaging, that is, the origin of the imaging view frustum, a central point of a near plane, and a central point of a far plane of the imaging view frustum are on a horizontal line. The imaging view frustum may alternatively be a top-view view frustum of imaging, that is, the origin of the imaging view frustum is higher than the central point of the near plane and the central point of the far plane of the imaging view frustum, so that the origin forms the imaging view frustum from a top-view angle and by using the near plane and the far plane.

By constructing a virtual coordinate system that has a same origin as a real coordinate system, virtual space may correspond to real space. When a calibration image is generated, only a position of a calibration object and a position of a human eye in the real coordinate system need to be correspondingly converted to those in the virtual coordinate system. In addition, because the origin of the virtual coordinate system is the same as that of the real coordinate system, a conversion calculation process is simple. An appropriate field of view may be selected based on the position of the human eye in the virtual coordinate system, and the imaging view frustum that uses the position of the human eye in the virtual coordinate system as the origin is constructed. Therefore, an augmented reality AR effect may be rendered for all objects within the view frustum range of the imaging view frustum. For example, a complex effect like a lane line or a traffic identifier may be rendered.

S502: Generate a calibration image of the calibration object on an imaging plane of the imaging view frustum based on a position of the calibration object located outside the vehicle in the imaging view frustum.

The calibration object in the real coordinate system is converted into the virtual coordinate system based on the correspondence between the constructed virtual coordinate system and the real coordinate system, and a position of the calibration object in the virtual coordinate system is obtained, where the calibration object is located within the view frustum range of the imaging view frustum in the virtual coordinate system. A near plane between the calibration object and the origin of the imaging view frustum is selected as the imaging plane based on the position of the calibration object in the imaging view frustum and the origin of the imaging view frustum and according to an imaging principle that the imaging view frustum maps an image forward. Cone mapping is performed on the imaging plane based on a distance relationship between the calibration object and the imaging plane, to generate the calibration image of the calibration object, where the calibration image is a two-dimensional image.

S503: Project the imaging plane including the calibration image to the virtual image plane of the augmented reality head-up display AR-HUD for display.

When the imaging plane of the imaging view frustum is used as an input image of the AR-HUD and projected to the virtual image plane of the AR-HUD for display, the calibration image is also displayed at a corresponding position on the virtual image plane of the AR-HUD based on a position of the calibration image on the imaging plane. In this way, the generated calibration image is projected to the calibration object in the real world, and is mapped to a three-dimensional world through an observation angle from the human eye, to implement enhanced display.

In some embodiments, when the imaging plane of the imaging view frustum is input into the AR-HUD as the input image, the AR-HUD crops the received input image according to a limitation of a picture that may be displayed by the AR-HUD, to crop the input image into a picture of an appropriate size for display on the virtual image plane of the AR-HUD.

S504: Adjust a parameter of the imaging view frustum, so that the calibration image that is located on the virtual image plane and that is observed by the human eye is aligned with the calibration object.

In this embodiment, an alignment effect between the calibration image on the virtual image plane of the AR-HUD and the calibration object is verified directly by using the human eye. The alignment effect may specifically include scale alignment and position alignment.

When a scale of the calibration image on the virtual image plane of the AR-HUD is not aligned with a scale of the calibration object through observation by the human eye, because the imaging plane is the near plane of the imaging view frustum, in this embodiment, a scale of the imaging plane may be adjusted by adjusting the field of view of the imaging view frustum. Because a relative distance between the imaging plane and the origin of the imaging view frustum does not change, a scale of the calibration image generated on the imaging plane does not change, but a ratio of the calibration image to the imaging plane changes. When the imaging plane whose scale is adjusted is input into the AR-HUD again as the input image, and is projected to the virtual image plane of the AR-HUD for display, the scale of the calibration image on the virtual image plane of the AR-HUD changes correspondingly. Therefore, a parameter of the field of view of the imaging view frustum is adaptively adjusted based on a display effect of the virtual image plane of the AR-HUD observed by the human eye, so that the calibration image and the calibration object on the virtual image plane of the AR-HUD may be displayed in scale alignment.

Likewise, when the position of the calibration image and the position of the calibration object on the virtual image plane of the AR-HUD are not aligned through observation by the human eye, because the imaging plane is the near plane of the imaging view frustum, in this embodiment, a position of the imaging plane of the imaging view frustum in a two-dimensional plane to which the imaging plane of the imaging view frustum belongs in the virtual coordinate system may be adjusted. Because a position of a target object in the virtual coordinate system does not change, when a two-dimensional position of the imaging plane changes, a relative position of the calibration image generated on the imaging plane is adaptively changed. When the imaging plane whose position is adjusted is input into the AR-HUD again as the input image, and is projected to the virtual image plane of the AR-HUD for display, a relative position of the calibration image on the virtual image plane of the AR-HUD is also correspondingly changed. Therefore, a two-dimensional offset of the imaging plane of the imaging view frustum in the virtual coordinate system is adaptively adjusted based on the display effect of the virtual image plane of the AR-HUD observed by the human eye, so that the calibration image and the calibration object on the virtual image plane of the AR-HUD may be displayed in position alignment.

In some embodiments of this application, in the constructed view frustum of imaging, the position of the human eye affects an initial position of the origin of the imaging view frustum. Therefore, an adjusted correspondence between the imaging view frustum and the position of the human eye may be obtained based on the calibration image and the calibration object that are displayed in alignment. In the correspondence, when the position of the human eye changes, the origin of the imaging view frustum also changes, and the position of the imaging plane of the imaging view frustum is correspondingly adjusted based on the foregoing two-dimensional offset. In this way, when the human eye of the driver change, or different drivers appear, the parameter of the imaging view frustum correspondingly changes, to ensure that the calibration image that is displayed on the virtual image plane of the AR-HUD and that is observed by the human eye is always aligned with the real world, which reduces jitter of a projection display effect and prevents dizziness. In addition, the adjusted view frustum of imaging may alternatively be configured to generate a calibration image in real time for a real-world object detected in a driving process, and display the calibration image on the virtual image plane of the AR-HUD in real time, to enhance obtaining of road surface information by a driver, and implement immersive experience.

An embodiment of this application further provides an AR-HUD projection method. An objective of the method is to enable an AR effect of AR-HUD projection display observed by a human eye to be aligned with a real world. To achieve the objective, in this embodiment, the human eye is used as a direct verification manner, and a virtual imaging model corresponding to a real human-eye imaging model is constructed to calibrate a display picture of the AR-HUD, to implement scale alignment and position alignment between the display picture of the AR-HUD and the real world. In this embodiment, a human eye detection module further obtains position information of the human eye in real time, to implement a real-time adaptation function on the display picture of the AR-HUD for position change of the human eye, to ensure that the display picture of the AR-HUD is always aligned with the real world, and ensure a display effect and immersive experience of the AR-HUD.

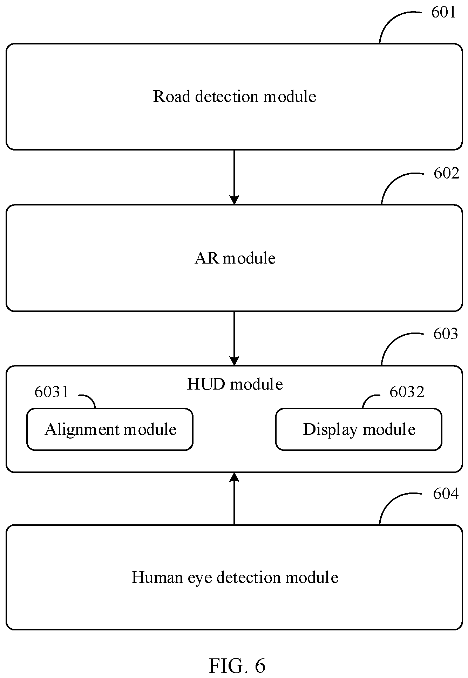

As shown in FIG. 6, a system architecture of the projection method in this embodiment is first described. The system architecture in this embodiment includes a road detection module 601, an AR module 602, an HUD module 603, and a human eye detection module 604. The HUD module 603 specifically further includes an alignment module 6031 and a display module 6032.

The road detection module 601 may be an external capture apparatus of a vehicle shown in FIG. 2, for example, a laser radar, an in-vehicle camera, or another device or a plurality of combined devices having an image capture or optical scanning function. The road detection module 601 may be disposed on a top of the vehicle, a head, or a side of a rear-view mirror of a vehicle cockpit facing outside the vehicle, and is mainly configured to detect and capture image information and position information of an environment in front of the vehicle, where the environment in front of the vehicle may include related information such as a vehicle in front of the vehicle, an obstacle, or a road indicator. The human eye detection module 604 may be an internal capture apparatus of the vehicle as shown in FIG. 2. For example, the human eye detection module 604 may be a device like an in-vehicle camera or a human eye detector. The human eye detection module 604 may be disposed on a side of a pillar A or B of the vehicle cockpit or a side of the rear-view mirror of the vehicle cockpit facing a user, and is mainly configured to detect and collect human-eye position information of a driver or a passenger in the vehicle cockpit. The AR module 602 and the HUD module 603 may be integrated in a projection apparatus 20 shown in FIG. 2, and are implemented by using a complete AR-HUD terminal product.

In a driving process, the road detection module 601 obtains environment information on a road, for example, three-dimensional coordinates of a pedestrian and a lane or a lane line location. The detected environment information is transferred to the AR module 602, a three-dimensional virtual coordinate system is constructed in the AR module 602, a three-dimensional AR effect is rendered at a position corresponding to the environment information, and the three-dimensional AR effect is mapped to a two-dimensional image. After mapping of the two-dimensional image is completed, with reference to a position of a human eye detected by the human eye detection module 604 in real time, the alignment module 6031 in the HUD module 603 completes scale alignment and position alignment between the two-dimensional image and the environment information. The aligned two-dimensional image is finally input to the display module 6032 for projection display. In this case, in an effective projection display range of the AR-HUD, regardless of a change of the position of the human eye, it can be observed that the two-dimensional image projected and displayed by the AR-HUD is completely aligned with the environment information in the road.

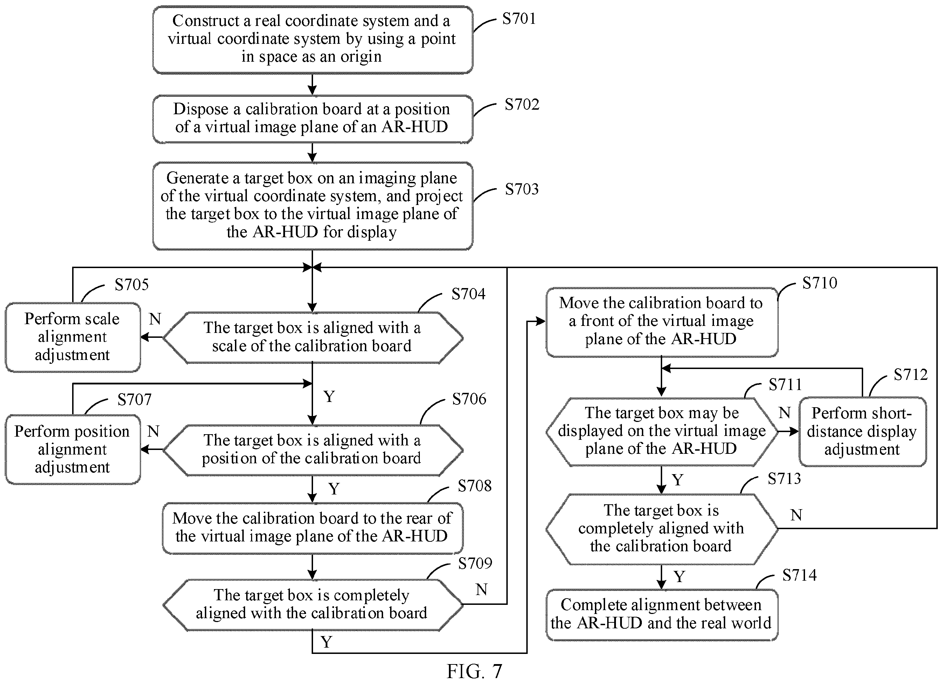

On the basis of the system architecture shown in FIG. 6, with reference to a flowchart shown in FIG. 7, the AR-HUD projection method provided in this embodiment is described in detail. An effect of alignment between the AR-HUD and the real world implemented according to the method exists in an entire driving process. Before driving starts, alignment calibration between the AR-HUD and the real world may be implemented in advance. An alignment calibration process specifically includes the following steps.

S701: Construct a real coordinate system and a virtual coordinate system by using a point in space as an origin.

In this embodiment, a point in a vehicle may be used as the origin, and the real coordinate system and the virtual coordinate system are constructed at the same time. The real coordinate system and the virtual coordinate system have a same origin and have a correspondence. Specifically, the point in the vehicle may be a camera in the vehicle, or may be an AR-HUD in the vehicle. The real coordinate system is used to determine three-dimensional coordinates of environment information in the real world, and a unit of the real coordinate system may be meters. A unit of the virtual coordinate system may be pixels. One meter in the real coordinate system and one unit in the virtual coordinate system have a proportional correspondence. According to the obtained three-dimensional coordinates of the environment information in the real coordinate system and the correspondence between the real coordinate system and the virtual coordinate system, a three-dimensional AR effect corresponding to the environment information may be rendered in the virtual coordinate system, and the three-dimensional AR effect is mapped to a two-dimensional image. The alignment calibration process in this embodiment is a process of aligning and calibrating the two-dimensional image and the environment information.

S702: Dispose a calibration board at a position of a virtual image plane of the AR-HUD.

A position of a human eye in the real coordinate system may be obtained based on a human eye of a driver detected by a human eye detection module. A position of a virtual image plane of the AR-HUD in the real coordinate system may be obtained based on an installation position and a projection angle of the AR-HUD, where the virtual image plane of the AR-HUD is a virtual image plane display plane of the AR-HUD observed by the human eye of the driver. Generally, the virtual image plane of the AR-HUD is located 7 to 10 meters away from the human eye of the driver facing the front of the vehicle. The two-dimensional image on the virtual image plane is observed by using the human eye of the driver, and the two-dimensional image may be mapped to the real world, to implement a three-dimensional display effect.

The calibration board is disposed on the virtual image plane of the AR-HUD, and the calibration board serves as a calibration reference in the alignment calibration process of this embodiment. In this embodiment, the calibration board may specifically be a substrate having a regular geometric shape.

S703: Generate a target box on an imaging plane of the virtual coordinate system, and project the target box to the virtual image plane of the AR-HUD for display.

A corresponding virtual human eye is determined in the virtual coordinate system based on the position of the human eye in the real coordinate system, the position of the virtual image plane of the AR-HUD, and the correspondence between the real coordinate system and the virtual coordinate system in step S702. Because the real coordinate system and the virtual coordinate system have the same origin, the position of the virtual human eye in the virtual coordinate system corresponds to the position of the human eye in the real coordinate system, a position of the imaging plane in the virtual coordinate system corresponds to the position of the virtual image plane of the AR-HUD in the real coordinate system, and the imaging plane and the virtual image plane have a same correspondence as the correspondence between the real coordinate system and the virtual coordinate system.

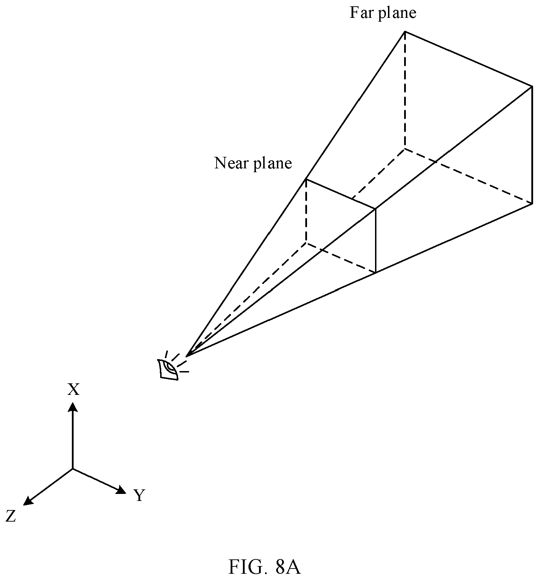

As shown in FIG. 8A, the virtual human eye is used as an origin, a field of view (field of view, FOV) is set, and a conical perspective projection model is constructed in the virtual coordinate system. The perspective projection model is specifically an imaging view frustum, to implement rendering of the AR effect of the environment information of the real world and two-dimensional mapping of the AR effect. The virtual human eye is the origin of the imaging view frustum, and the field of view determines a view frustum range of the imaging view frustum. A near plane of the imaging visual cone is selected as the imaging plane. In this embodiment, a near plane of a corresponding position of the imaging view frustum in the virtual coordinate system may be selected as the imaging plane based on the position of the virtual image plane of the AR-HUD in the real coordinate system, so that the position of the imaging plane in the virtual coordinate system is correspondingly the same as the position of the virtual image plane of the AR-HUD in the real coordinate system.

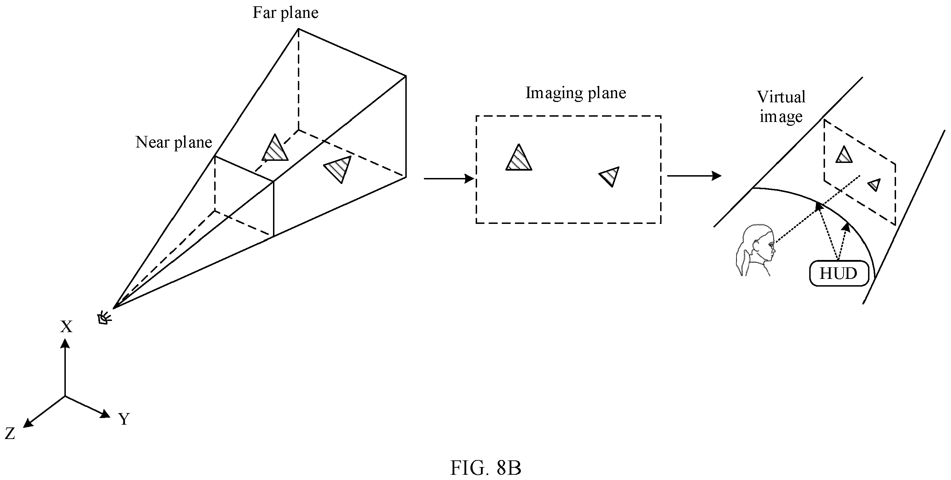

As shown in FIG. 8A, there is a far plane at an infinite distance of the imaging view frustum. According to an imaging principle of the imaging view frustum, a rendered AR effect that is located within the field of view (field of view, FOV) of the imaging view frustum and that is located between the imaging plane and the far plane is proportionally mapped to the imaging plane in a conical mapping manner based on a distance of the far plane, that is, the two-dimensional image of the AR effect is generated on the imaging plane. As shown in FIG. 8B, the imaging plane to which the two-dimensional image is mapped is sent to the AR-HUD as an input image, where the imaging plane has a corresponding projection relationship with the virtual image plane of the AR-HUD, and the two-dimensional image on the imaging plane may be projected and displayed on the virtual image plane of the AR-HUD based on the projection relationship. A rendering process in the imaging view frustum and a projection process of the two-dimensional image are specifically performing matrix transformation on three-dimensional coordinates of the AR effect in the virtual coordinate system, to convert the three-dimensional coordinates into coordinates in the real coordinate system. A formula of the matrix transformation is:

$$S=P*V*O$$

O is three-dimensional coordinates of the AR effect rendered in the virtual coordinate system, V is an observation matrix of the virtual human eye in the virtual coordinate system, P is a mapping matrix of the imaging plane of the imaging view frustum, and S is coordinates of a virtual image plane of an HUD in the real coordinate system. The AR effect rendered in the virtual coordinate system is mapped to the imaging plane of the imaging view frustum in a form of a two-dimensional image, and the imaging plane is used as the input image of the AR-HUD, to perform projection display on the virtual image plane of the AR-HUD.

In this embodiment, a corresponding target box may be generated on the imaging plane of the imaging view frustum based on the calibration board of the virtual image plane of the AR-HUD, where the target box has a same geometric shape as the calibration board, and then the imaging plane is used as the input image to perform projection display on the virtual image plane of the AR-HUD. In this embodiment, the alignment calibration process is specifically a process of aligning the target box displayed on the virtual image plane of the AR-HUD with the calibration board.

S704: Observe whether the target box is aligned with a scale of the calibration board.

In this embodiment, whether the scale is aligned may be specifically whether a size of the target box on the virtual image plane of the AR-HUD is aligned with a size of the calibration board. If the size of the target box is aligned with the size of the calibration board, step S706 is performed; or if the size of the target box is not aligned with the size of the calibration board, step S705 is performed.

S705: Perform scale alignment adjustment.

When the target box is not aligned with the scale of the calibration board, it indicates that after the target box generated on the imaging plane is projected, the target box is not aligned with the scale of the calibration board on the virtual image plane of the AR-HUD. When the imaging plane is used as the input image of the AR-HUD, the AR-HUD crops the input image based on a display pixel of the AR-HUD, that is, the input image of the imaging plane is cropped into a scale that matches the display pixel for display. Therefore, on the premise that the unit of the virtual coordinate system, the imaging view frustum, and the display pixel of the AR-HUD are determined, when the target box is not aligned with the scale of the calibration board, the scale of the imaging plane of the imaging view frustum needs to be adjusted proportionally, to proportionally adjust the scale of the image cropped by the AR-HUD, to proportionally adjust a relative size of the target box in the cropped image, so that the target box is aligned with the scale of the calibration board.

In this embodiment, adjusting the scale of the imaging plane of the imaging view frustum may be implemented by adjusting the field of view of the imaging view frustum. Specifically, when the scale of the target box is greater than the calibration board, the scale of the imaging plane may be scaled up proportionally by enlarging the field of view of the imaging view frustum, so that the imaging plane input to the AR-HUD is scaled up proportionally. Similarly, when the scale of the target box is less than the calibration board, the scale of the imaging plane may be scaled down proportionally by enlarging the field of view of the imaging view frustum, so that the imaging plane input to the AR-HUD is scaled down proportionally. Therefore, if a size of the generated target box and a position of the imaging plane remain unchanged, the scale of the target box displayed on the virtual image plane of the AR-HUD may be adjusted by adjusting a size of the field of view of the imaging view frustum, to complete scale alignment with the calibration board, that is, complete scale alignment between the imaging plane of the imaging view frustum and the virtual image plane of the AR-HUD.

S706: Observe whether the target box is aligned with a position of the calibration board.

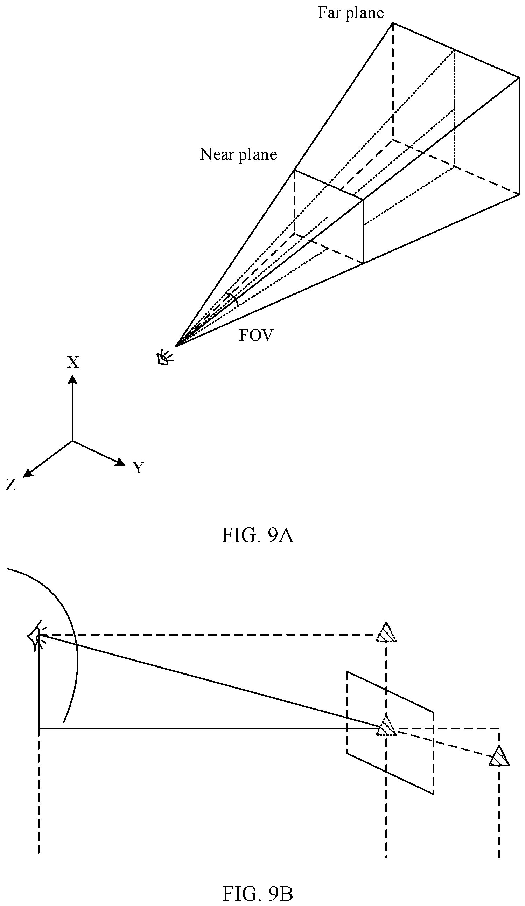

After adjustment in step S705, although scale alignment is implemented between the imaging plane of the imaging view frustum in the virtual coordinate system and the virtual image plane of the AR-HUD in the real coordinate system, an offset of positions of the target box and the calibration board displayed on the virtual image plane of the AR-HUD still exists. There are usually two reasons for the offset. One reason is that the imaging view frustum is constructed in the virtual coordinate system, the virtual human eye corresponds to the central points of the near plane and the far plane, as shown in FIG. 9A. However, in the real coordinate system, the position of the virtual image plane of the AR-HUD is usually located below the position of the human eye, that is, the central point of the virtual image plane is lower than the human eye, as shown in FIG. 9B. Therefore, when the imaging plane is projected as the input image to the virtual image plane of the AR-HUD for display, an actually displayed two-dimensional image is lower than environment information in the real world, and consequently, the position of the displayed target box is lower than the position of the calibration board. Another reason is that in an observation process by using the human eye, the position of the human eye is not fixed, but a position of a virtual image plane of an AR-HUD that has been installed is fixed. Consequently, when the position of the human eye moves, a relative position of the human eye relative to a central point of the virtual image plane of the AR-HUD is offset correspondingly. Consequently, the displayed target box may not always be aligned with the position of the calibration board.

In this embodiment, whether the position is aligned may be specifically whether a position of the target box on the virtual image plane of the AR-HUD is aligned with a position of the calibration board. If the position of the target box is aligned with the position of the calibration board, step S708 is performed; or if the position of the target box is not aligned with the position of the calibration board, step S707 is performed.

S707: Perform position alignment adjustment.

When the target box is not aligned with the position of the calibration board, it indicates that after the target box generated on the imaging plane is projected, the target box is not aligned with the position of the calibration board on the virtual image plane of the AR-HUD. When the imaging plane is used as the input image of the AR-HUD, the AR-HUD crops the input image based on the display pixel of the HUD, that is, the input image of the imaging plane is cropped into the scale that matches the display pixel for display. Therefore, on the premise that the unit of the virtual coordinate system, the imaging view frustum, the display pixel of the AR-HUD, and a cropping position are determined, when the target box is not aligned with the position of the calibration board, the position of the imaging plane of the imaging view frustum in a plane to which the imaging plane belongs to needs to be adjusted, to adjust the position of the imaging plane input to the AR-HUD, to adjust a relative position of the target box in the cropped image, so that the target box is aligned with the position of the calibration board.

In this embodiment, a two-dimensional offset of the imaging plane of the imaging view frustum in the virtual coordinate system may be adjusted, to adjust the relative position of the target box on the imaging plane. It should be noted that adjusting the two-dimensional offset of the imaging plane in the virtual coordinate system is essentially adjusting a horizontal position or a vertical position of the imaging plane in a plane to which the imaging plane belongs.

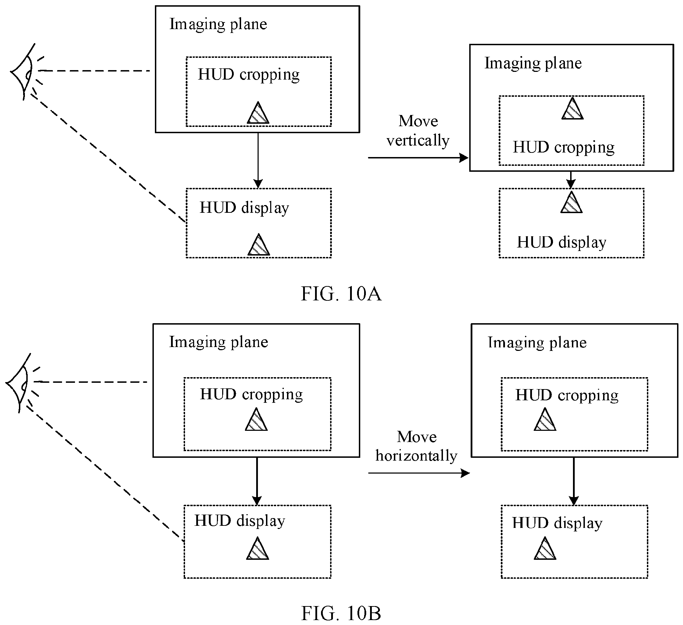

Specifically, as shown in FIG. 10A, when a vertical position of the displayed target box is lower than a vertical position of the calibration board, in this case, the position of the imaging plane of the imaging view frustum in the virtual coordinate system may be vertically moved downward, so that a relative position of the target box to the imaging plane is vertically moved upward, so that the relative position of the target box in the image cropped by the AR-HUD is higher than an original position. In this way, the adjusted target box is aligned with the vertical position of the calibration board. Similarly, as shown in FIG. 10B, when a horizontal position of the displayed target box is more to the right of a horizontal position of the calibration board relatively, in this case, the position of the imaging plane of the imaging view frustum in the virtual coordinate system may be horizontally moved rightward, so that a relative position of the target box to the imaging plane is horizontally moved leftward, so that the relative position of the target box in the image cropped by the AR-HUD is more to the left than an original position. In this way, the adjusted target box is aligned with the horizontal position of the calibration board. Therefore, if a size of the generated target box and a scale of the imaging plane remain unchanged, the position of the target box displayed on the virtual image plane of the AR-HUD may be adjusted by adjusting the position of the imaging plane of the imaging view frustum, to complete position alignment with the calibration board, that is, complete position alignment between the imaging plane of the imaging view frustum and the virtual image plane of the AR-HUD.

The following calculation may be performed on the horizontal offset and the vertical offset ($X_{offset}$, $Y_{offset}$) of the imaging plane of the imaging view frustum according to a compensation principle:

$$X_{offset} = \frac{1}{m}(X_{hud} - X_{eye})$$

$$Y_{offset} = \frac{1}{m}(Y_{hud} - Y_{eye})$$

The unit of the virtual coordinate system is pixel, and the unit of the real coordinate system is meter. In this case, 1 pixel = m meter, ($X_{hud}$, $Y_{hud}$) is a horizontal and vertical coordinate of the central point of the virtual image plane of the AR-HUD in the real coordinate system, and ($X_{eye}$, $Y_{eye}$) is a horizontal and vertical coordinate of the human eye in the real coordinate system. According to the foregoing calculation formula, a horizontal offset $X_{offset}$ and a vertical offset $Y_{offset}$ of the imaging plane of the imaging view frustum that need to be adjusted in the virtual coordinate system may be obtained by calculation, and the imaging plane of the imaging view frustum is adjusted in a two-dimensional direction in a unit of pixel based on the horizontal offset $X_{offset}$ and the vertical offset $Y_{offset}$, so that the target box displayed on the virtual image plane of the AR-HUD is aligned with the position of the calibration board.

S708: Move the calibration board to the rear of the virtual image plane of the AR-HUD.

After the scale alignment and the position alignment in steps S704 to S706 are completed, effects of the scale alignment and the position alignment may be verified by moving a position of the calibration board in the real coordinate system. The calibration board is moved to the rear of the virtual image plane of the AR-HUD, that is, the calibration board is moved to a longer distance to the human eye, to observe whether the target box displayed on the virtual image plane is aligned with the calibration board.

S709: Observe whether the target box is completely aligned with the calibration board.

When the calibration board is moved to the longer distance farther to the human eye, the calibration board is still located between the imaging plane and the far plane of the imaging view frustum in the virtual coordinate system. In this case, according to the imaging principle, the scale of the target box generated on the imaging plane decreases proportionally as the distance of the calibration board is longer. By observing whether a display effect of a regenerated target box on the virtual image plane of the AR-HUD is completely aligned with the calibration board that is moved to a long distance, the alignment calibration effect of this method is verified. If the target frame is completely aligned with the calibration board, step S710 is performed; or if the target frame is not completely aligned with the calibration board, step S704 is performed, to perform adjustment steps of the scale alignment and the position alignment again.

S710: Move the calibration board to a front of the virtual image plane of the AR-HUD.

The calibration board is moved to the front of the virtual image plane of the AR-HUD, that is, the calibration board is moved to a shorter distance to the human eye, to observe whether the target box corresponding to the calibration board may be displayed on the virtual image plane, and whether the target box is completely aligned with the calibration board.

S711: The target box may be displayed on the virtual image plane of the AR-HUD.

In the constructed view frustum of imaging, the imaging plane is selected based on the position of the virtual image plane of the AR-HUD in the real coordinate system. Therefore, when the calibration board is moved to the front of the virtual image plane of the AR-HUD, a corresponding position of the calibration board in the virtual coordinate system is also moved to the front of the imaging plane relatively. According to the imaging principle of the imaging view frustum, the calibration board located in front of the imaging plane may not be mapped to the imaging plane.

S712: Perform short-distance display adjustment.

According to the imaging principle of the imaging view frustum, in this embodiment, the position of the imaging plane in the imaging view frustum is adjusted based on the corresponding position of the calibration board in the virtual coordinate system, that is, a near plane that is in the imaging view frustum and that is between the corresponding position of the calibration board in the virtual coordinate system and the origin of the imaging view frustum is reselected as a new imaging plane, and according to the imaging principle, a target box corresponding to the calibration board is regenerated on the new imaging plane. In this embodiment, a change of a relative distance between the imaging plane and the origin does not change the scale of the imaging plane. The scale of the imaging plane is determined only by the field of view of the imaging view frustum. When the distance between the imaging plane and the origin of the imaging view frustum is adjusted, two-dimensional mapping on environment information is selectively performed within the view frustum range of the imaging view frustum, which changes a quantity of two-dimensional images that may be generated on the imaging plane.

S713: Observe whether the target box is completely aligned with the calibration board.

Whether the display effect of the regenerated target box on the virtual image plane of the AR-HUD is completely aligned with the calibration board that is moved to a close distance is observed, to verify the alignment calibration effect of this method. If the target frame is completely aligned with the calibration board, step S714 is performed; or if the target frame is not completely aligned with the calibration board, step S704 is performed, to perform adjustment steps of the scale alignment and the position alignment again.

S714: Complete alignment between the AR-HUD and the real world.

The position of the calibration board in the real coordinate system is changed, and the target box correspondingly generated based on the calibration board whose position is changed is aligned with the display effect of the calibration board on the virtual image of the AR-HUD, so that alignment calibration is implemented between the imaging plane of the imaging view frustum constructed based on the position of the human eye and the virtual image of the AR-HUD. After the alignment calibration is completed, when the human-eye position of the driver changes, or when different drivers drive, the constructed view frustum of imaging is correspondingly adjusted, to ensure that the display effect of the virtual image of the AR-HUD observed by the human eye is always completely aligned with the real world, which improves observation experience of the driver and achieves a better driving assistance effect.

As shown in FIG. 11, an embodiment of this application provides a projection apparatus. The projection apparatus may be configured to implement the projection method, the calibration method, and the AR-HUD projection method and display method in the foregoing embodiments. As shown in FIG. 11, the projection apparatus 1100 includes an obtaining module 1101, a projection module 1102, and an adjustment module 1103.

The obtaining module 1101 is configured to perform step S401 in the projection method and an example thereof. The projection module 1102 is configured to perform any one of step S402 in the projection method, S501 to S503 in the calibration method, or S701 to S703 in the AR-HUD projection method, and any optional example thereof. The adjustment module 1103 is configured to perform any one of step S403 in the projection method, S504 in the calibration method, or S704 to S714 in the AR-HUD projection method, and any optional example thereof. For details, refer to detailed descriptions in the method embodiments. Details are not described herein again.

In some embodiments, the projection apparatus 1100 may further have a prompt module 1104. The prompt module 1104 may implement a human machine interaction-related part in the projection method, the calibration method, and the AR-HUD projection method, and guide, by sending a prompt message to a user, the user to participate in an alignment process or an adjustment process in the projection method, the calibration method, or the AR-HUD projection method. For example, the prompt module 1104 may be used to prompt the user to determine, by using a human eye, whether the calibration object overlaps the projection plane of the calibration object; or when an alignment requirement of the user is obtained, the prompt module 1104 may be used to send an alignment start prompt message and an alignment completion prompt message to the user.

It should be understood that the projection apparatus in this embodiment of this application may be implemented by software, for example, a computer program or instructions having the foregoing functions. The corresponding computer program or the corresponding instructions may be stored in a memory in a terminal. A processor reads the corresponding computer program or the corresponding instructions in the memory to implement the foregoing functions. Alternatively, the projection apparatus in this embodiment of this application may be implemented by hardware. For example, the obtaining module 1101 may be implemented by a capture apparatus on a vehicle, for example, an in-vehicle camera or a laser radar. Alternatively, the obtaining module 1101 may be implemented by an interface circuit between a processor and an in-vehicle camera or a laser radar on a vehicle. The prompt module 1104 may be implemented by an apparatus like a central control screen, sound, or a microphone on a vehicle. The projection module 1102 may be implemented by an HUD or an AR-HUD on a vehicle, or the projection module 1102 may be implemented by a processor of an HUD or an AR-HUD, or the projection module may be implemented by a terminal like a mobile phone or a tablet. The adjustment module 1103 may be implemented by a processor of an HUD or an AR-HUD, or the adjustment module 1103 may be implemented by a processor of an in-vehicle processing apparatus like an in-vehicle infotainment or an in-vehicle computer. Alternatively, the projection apparatus in this embodiment of this application may be implemented by a combination of a processor and a software module.

It should be understood that for processing details of the apparatus or the module in this embodiment of this application, refer to related descriptions of embodiments shown in FIG. 4, FIG. 5, and FIG. 7 and related extended embodiments. Details are not described again in this embodiment of this application.

In addition, an embodiment of this application further provides a vehicle having the foregoing projection apparatus. The vehicle may be a household car, a cargo vehicle, or the like, or may be a special vehicle like an ambulance, a firefighting vehicle, a police vehicle, or an engineering rescue vehicle. The vehicle may store an imaging model and a related training set in the foregoing embodiments in a local storage manner. When the projection method or the calibration method needs to be implemented, the imaging model may be loaded more quickly, to implement quick projection display alignment or adjustment based on a human eye position of a user, which has advantages of a low delay and good experience. In addition, the vehicle may alternatively download, in a manner of interacting with cloud, an imaging model stored in the cloud to a local computer in a manner of downloading from the cloud, to implement projection display alignment or adjustment based on the human eye position of the user. Cloud interaction has advantages of rich data volume, timely model update, and higher precision.

FIG. 13 is a schematic diagram of a structure of a computing device 1500 according to an embodiment of this application. The computing device may be used as a projection apparatus, and execute the optional embodiments of the projection method, the calibration method, or the AR-HUD projection method. The computing device may be a terminal, or may be a chip or a chip system in the terminal. As shown in FIG. 13, the computing device 1500 includes a processor 1510, a memory 1520, a communication interface 1530, and a bus 1540.

It should be understood that the communication interface 1530 in the computing device 1500 shown in FIG. 13 may be configured to communicate with another device, and may specifically include one or more transceiver circuits or interface circuits.

The processor 1510 may be connected to the memory 1520. The memory 1520 may be configured to store program code and data. Therefore, the memory 1520 may be an internal storage unit of the processor 1510, an external storage unit independent of the processor 1510, or a component including an internal storage unit of the processor 1510 and an external storage unit independent of the processor 1510.

Optionally, the computing device 1500 may further include the bus 1540. The memory 1520 and the communication interface 1530 may be connected to the processor 1510 by using the bus 1540. The bus 1540 may be a peripheral component interconnect (Peripheral Component Interconnect, PCI) bus, an extended industry standard architecture (Extended Industry Standard Architecture, EISA) bus, or the like. The bus 1540 may be classified into an address bus, a data bus, a control bus, or the like. For ease of representation, only one line is used to represent the bus in FIG. 13, but this does not mean that there is only one bus or only one type of bus.

It should be understood that in this embodiment of this application, the processor 1510 may be a central processing unit (central processing unit, CPU). The processor may be alternatively another general-purpose processor, a digital signal processor (digital signal processor, DSP), an application specific integrated circuit (application specific integrated circuit, ASIC), a field programmable gate array (field programmable gate Array, FPGA) or another programmable logical device, a discrete gate or transistor logic device, a discrete hardware component, or the like. The general-purpose processor may be a microprocessor, or the processor may be any conventional processor or the like. Alternatively, the processor 1510 uses one or more integrated circuits to execute a related program, to implement the technical solutions provided in embodiments of this application.

The memory 1520 may include the read-only memory and the random access memory, and provides instructions and data to the processor 1510. A part of the processor 1510 may further include a non-volatile random access memory. For example, the processor 1510 may further store information of a device type.

When the computing device 1500 runs, the processor 1510 executes computer-executable instructions in the memory 1520 to perform any operation step and any optional embodiment of the projection method, the calibration method, or the AR-HUD projection method.

It should be understood that the computing device 1500 according to this embodiment of this application may correspond to a corresponding body executing the methods according to embodiments of this application, and the foregoing and other operations and/or functions of each module in the computing device 1500 are separately intended to implement corresponding procedures of the methods in the embodiments. For simplicity, details are not described herein again.

A person of ordinary skill in the art may be aware that, in combination with examples described in embodiments disclosed in this specification, units and algorithm steps can be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may have another manner for division in actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between apparatuses or units may be implemented in electronic, mechanical, or other forms.

Units described as separate components may or may not be physically separate. Components displayed as units may or may not be physical units, may be located in one position, or may be distributed on a plurality of network units. Some or all units may be selected based on an actual requirement to achieve the objective of the solutions of embodiments.

In addition, functional units in embodiments of this application may be integrated into one processing unit, or each of the units may physically and separately exist, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that may store program code, for example, a USB flash drive, a removable hard disk drive, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program, and when the program is executed by a processor, the program is used to perform a diverse problem generation method. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof. In this specification, the computer-readable storage medium may be any tangible medium including or storing a program that may be used by an instruction execution system, apparatus, or device, or may be used in combination with an instruction execution system, apparatus, or device.

A computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any appropriate combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any appropriate medium, including but not limited to Wi-Fi, a wire, an optical cable, RF, or the like, or any appropriate combination thereof.

Computer program code for performing operations in this application may be written in one or more programming languages, or a combination thereof. The programming languages include object-oriented programming languages, such as Java, Smalltalk, and C++, and also include a conventional procedural programming language, for example, a "C" language or a similar programming language. The program code may be executed entirely on a user computer, or some may be executed on a user computer. Alternatively, the program code may be executed as a separate software package, or some may be executed on a user computer and some is executed on a remote computer, or the program code may be entirely executed on a remote computer or a server.

If the remote computer is used, the remote computer may be connected to the user computer by using any type of network, including a local area network (LAN) or a wide area network (WAN), or may be connected to an external computer (for example, connected by using an internet through internet service provider).

It should be noted that embodiments described in this application are merely some but not all of embodiments of this application. Generally, components of embodiments of this application described and shown in the accompanying drawings herein may be arranged and designed in various configurations. Therefore, detailed descriptions above of embodiments of this application provided in the accompanying drawings are not intended to limit the scope of the claimed application, but merely to represent selected embodiments of this application. All other embodiments obtained by a person skilled in the art based on embodiments of this application without creative efforts shall fall within the protection scope of this application.

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that embodiments of this application described herein can be implemented in an order other than an order illustrated or described herein.

In the foregoing description, numbers for representing steps, such as S110, S120, ..., and the like, do not necessarily indicate that the steps are performed accordingly, and may further include an intermediate step or may be replaced with another step. If permitted, a sequence of a previous step and a latter step may be exchanged, or the steps may be performed simultaneously.

The term "include" used in this specification and claims should not be construed as being limited to content listed below, and does not exclude other elements or steps. It should be construed as specifying existence of a mentioned feature, whole, step, or part, but does not preclude existence or addition of one or more other features, wholes, steps, or parts and their groups. Therefore, an expression "a device including an apparatus A and an apparatus B" should not be limited to a device including only a component A and a component B.

"One embodiment" or "an embodiment" mentioned in this specification indicates that a particular feature, structure, or property that is described with reference to the embodiment is included in at least one embodiment of this application. Therefore, the terms such as "in one embodiment" or "in an embodiment" that exist in this specification do not necessarily indicate a same embodiment, but may indicate a same embodiment. In addition, in embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It should be noted that the foregoing are merely example embodiments of this application and used technical principles. A person skilled in the art may understand that this application is not limited to specific embodiments described herein, and a person skilled in the art can make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

**Claims**

1. A projection method, comprising:

    obtaining image information and position information of a calibration object;
    projecting the calibration object based on the image information and the position information of the calibration object and an imaging model; and
    adjusting a parameter of the imaging model when an overlap ratio between the calibration object and a projection plane of the calibration object is less than a first threshold.

2. The method according to claim 1, wherein the adjusting a parameter of the imaging model comprises: adjusting one or more parameters of a field of view and a position of an imaging plane of the imaging model.

3. The method according to claim 2, wherein the adjusting a parameter of the imaging model when an overlap ratio between the calibration object and a projection plane of the calibration object is less than a first threshold specifically comprises: when an area difference between the calibration object and the projection plane of the calibration object is greater than a second threshold, adjusting the field of view of the imaging model.

4. The method according to claim 2, wherein the adjusting a parameter of the imaging model when an overlap ratio between the calibration object and a projection plane of the calibration object is less than a first threshold specifically comprises: when an offset between the calibration object and the projection plane of the calibration object is greater than a third threshold, adjusting a two-dimensional position of the imaging plane of the imaging model.

5. The method according to claim 1, wherein the overlap ratio between the calibration object and the projection plane of the calibration object is determined by using a pixel offset between the calibration object and the projection plane of the calibration object, and the pixel offset is determined by using an image that is captured by a camera and that comprises the calibration object and the projection plane of the calibration object.

6. The method according to claim 1, wherein the imaging model is trained based on a training set comprising a plurality of training samples, wherein the training samples comprise parameters of human-eye position information, the image information and the position information of the calibration object, and the overlap ratio between the calibration object and the projection plane of the calibration object.

7. The method according to claim 1, wherein the method further comprises:

    obtaining an alignment requirement of a user, and sending an alignment start prompt message to the user;
    obtaining a human-eye position of the user, and aligning the parameter of the imaging model based on the human-eye position of the user; and
    after the alignment is completed, sending an alignment completion prompt message to the user.

8. The method according to claim 7, wherein the method further comprises:

    determining, by using a human eye, whether the calibration object overlaps the projection plane of the calibration object; and
    when the calibration object does not overlap the projection plane of the calibration object, adjusting a parameter of an aligned imaging model according to an adjustment instruction of the user.

9. A projection apparatus, comprising:

    an obtaining module, configured to obtain image information and position information of a calibration object;
    a projection module, configured to project the calibration object based on the image information and the position information of the calibration object and an imaging model; and
    an adjustment module, configured to: when an overlap ratio between the calibration object and a projection plane of the calibration object is less than a first threshold, adjust a parameter of the imaging model.

10. The apparatus according to claim 9, wherein when being configured to adjust the parameter of the imaging model, the adjustment module is specifically configured to:
adjust one or more parameters of a field of view and a position of an imaging plane of the imaging model.

11. The apparatus according to claim 10, wherein the adjustment module is specifically configured to:
when an area difference between the calibration object and the projection plane of the calibration object is greater than a second threshold, adjust the field of view of the imaging model.

12. The apparatus according to claim 10, wherein the adjustment module is specifically configured to:
when an offset between the calibration object and the projection plane of the calibration object is greater than a third threshold, adjust a two-dimensional position of the imaging plane of the imaging model.

13. The apparatus according to claim 9, wherein the overlap ratio between the calibration object and the projection plane of the calibration object is determined by using a pixel offset between the calibration object and the projection plane of the calibration object, and the pixel offset is determined by using an image that is captured by a camera and that comprises the calibration object and the projection plane of the calibration object.

14. The apparatus according to claim 9, wherein the imaging model is trained based on a training set comprising a plurality of training samples, wherein the training samples comprise parameters of human-eye position information, the image information and the position information of the calibration object, and the overlap ratio between the calibration object and the projection plane of the calibration object.

15. The apparatus according to claim 9, wherein the apparatus further comprises:

a prompt module, configured to: when obtaining an alignment requirement of a user, send an alignment start prompt message to the user;
the adjustment module is further configured to align the parameter of the imaging model based on an obtained human-eye position of the user; and
the prompt module is further configured to: after the alignment is completed, send an alignment completion prompt message to the user.

16. The apparatus according to claim 15, wherein

the prompt module is further configured to prompt the user to determine, by using a human eye, whether the calibration object overlaps the projection plane of the calibration object; and
the adjustment module is further configured to: when the calibration object does not overlap the projection plane of the calibration object, adjust a parameter of an aligned imaging model according to an adjustment instruction of the user.

17. A computing device, comprising:

a processor; and
a memory, wherein the memory stores program instructions, and when the program instructions are executed by the processor, the processor is enabled to perform the projection method according to any one of claims 1 to 8.

18. A computer-readable storage medium, wherein the computer-readable medium stores program code, and when the program code is executed by a computer or a processor, the computer or the processor is enabled to perform the projection method according to any one of claims 1 to 8.

19. A computer program product, wherein when program code comprised in the computer program product is executed by a computer or a processor, the computer or the processor is enabled to perform the projection method according to any one of claims 1 to 8.

FIG. 1

FIG. 2

FIG. 3

S401

Obtain image information and position information of a calibration object

S402

Project the calibration object based on the image information and the position information of the calibration object and an imaging model

S403

When an overlap ratio between the calibration object and a projection plane of the calibration object is less than a first threshold, adjust a parameter of the imaging model

FIG. 4

S501

Construct a virtual imaging view frustum in which a human eye of a driver is used as an origin

S502

Generate a calibration image of a calibration object on an imaging plane of the imaging view frustum based on a position of the calibration object located outside a vehicle in the imaging view frustum

S503

Project the imaging plane including the calibration image to a virtual image plane of an augmented reality head-up display AR-HUD for display

S504

Adjust a parameter of the imaging view frustum, so that the calibration image that is located on the virtual image plane and that is observed by the human eye is aligned with the calibration object

FIG. 5

601

Road detection module

602

AR module

603

HUD module

6031

Alignment module

6032

Display module

604

Human eye detection module

FIG. 6

Construct a real coordinate system and a
virtual coordinate system by using a point
in space as an origin ⌐ S701

Dispose a calibration board at a position
of a virtual image plane of an AR-HUD ⌐ S702

Generate a target box on an imaging plane
of the virtual coordinate system, and project
the target box to the virtual image plane of
the AR-HUD for display ⌐ S703

⌐ S705
Perform scale
alignment
adjustment

N ⌐ S704
The target box is aligned with a
scale of the calibration board

⌐ S710
Move the calibration board to
a front of the virtual image
plane of the AR-HUD

Y

⌐ S707
Perform position
alignment
adjustment

N ⌐ S706
The target box is aligned with a
position of the calibration board

⌐ S711
The target box may be
displayed on the virtual image
plane of the AR-HUD

N ⌐ S712
Perform short-
distance display
adjustment

Y

⌐ S708
Move the calibration board to the rear of
the virtual image plane of the AR-HUD

Y ⌐ S713
The target box is
completely aligned with
the calibration board

N

⌐ S709
The target box is completely
aligned with the calibration board

N

Y ⌐ S714
Complete alignment between
the AR-HUD and the real world

Y

FIG. 7

Far plane

Near plane

FIG. 8A

FIG. 8B

Far plane

Near plane

FOV

X

Z Y

FIG. 9A

FIG. 9B

FIG. 10A

FIG. 10B

Projection apparatus 1100

Obtaining module ⌐ 1101

Projection module ⌐ 1102

Adjustment module ⌐ 1103

Prompt module ⌐ 1104

FIG. 11

The vehicle has activated alignment of the projection device; please keep a correct sitting posture

FIG. 12A

The vehicle has completed the alignment of the projection device

FIG. 12B

Computing device 1500

Processor — 1510

Communication interface — 1530

— 1540

Memory — 1520

FIG. 13

### INTERNATIONAL SEARCH REPORT

| International application No. |
| --- |
| **PCT/CN2021/094344** |

**A.    CLASSIFICATION OF SUBJECT MATTER**

G09G 5/377(2006.01)i

According to International Patent Classification (IPC) or to both national classification and IPC

**B.    FIELDS SEARCHED**

Minimum documentation searched (classification system followed by classification symbols)

G09G

Documentation searched other than minimum documentation to the extent that such documents are included in the fields searched

Electronic data base consulted during the international search (name of data base and, where practicable, search terms used)

WPI; EPODOC; CNKI; CNPAT: 投影, 标定物, 图像, 位置, 成像, 重合度, 重叠, 调整, 参数, 虚像, 对齐, 校正, 校准, 抬头显示, 水平显示, HUD, projection, calibration, image, position, imaging, contact ratio, overlay, adjustment, parameter, virtual image, alignment, correction, calibration, head-up display, level display

**C.    DOCUMENTS CONSIDERED TO BE RELEVANT**

| Category* | Citation of document, with indication, where appropriate, of the relevant passages | Relevant to claim No. |
| --- | --- | --- |
| X | US 2013169679 A1 (AUTOMOTIVE RESEARCH & TEST CENTER) 04 July 2013 (2013-07-04) description, paragraphs [0022]-[0032] | 1-19 |
| A | CN 109917920 A (BAIDU ONLINE NETWORK TECHNOLOGY (BEIJING) CO., LTD.) 21 June 2019 (2019-06-21) entire document | 1-19 |
| A | CN 111107332 A (HUMAN HORIZONS (SHANGHAI) CLOUD COMPUTING TECHNOLOGY CO., LTD.) 05 May 2020 (2020-05-05) entire document | 1-19 |
| A | CN 112344963 A (NANJING XUNTIANYOU TECHNOLOGY CO., LTD.) 09 February 2021 (2021-02-09) entire document | 1-19 |
| A | CN 111754442 A (HUIZHOU DESAY SV AUTOMOTIVE CO., LTD.) 09 October 2020 (2020-10-09) entire document | 1-19 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 January 2022** | **17 February 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/094344**

### C.    DOCUMENTS CONSIDERED TO BE RELEVANT

| Category* | Citation of document, with indication, where appropriate, of the relevant passages | Relevant to claim No. |
|---|---|---|
| A | CN 109873997 A (GUI'AN NEW DISTRICT XINTE ELECTRIC VEHICLE INDUSTRIAL CO., LTD.) 11 June 2019 (2019-06-11)<br>entire document | 1-19 |

Form PCT/ISA/210 (second sheet) (January 2015)

International application No.

**PCT/CN2021/094344**

| Patent document cited in search report | | | Publication date (day/month/year) | Patent family member(s) | Publication date (day/month/year) |
|---|---|---|---|---|---|
| US | 2013169679 | A1 | 04 July 2013 | None | |
| CN | 109917920 | A | 21 June 2019 | None | |
| CN | 111107332 | A | 05 May 2020 | None | |
| CN | 112344963 | A | 09 February 2021 | None | |
| CN | 111754442 | A | 09 October 2020 | None | |
| CN | 109873997 | A | 11 June 2019 | None | |

Form PCT/ISA/210 (patent family annex) (January 2015)